Europäisches Patentamt

European Patent Office

Office européen des brevets

(11) Publication number: **0 322 653**
**A1**

# (12) EUROPEAN PATENT APPLICATION

(21) Application number: **88120933.2**

(22) Date of filing: **14.12.88**

(51) Int. Cl.⁴: **G11B 7/24**

(30) Priority: **28.12.87 JP 334681/87**

(43) Date of publication of application:
**05.07.89 Bulletin 89/27**

(84) Designated Contracting States:
**DE FR GB NL**

(71) Applicant: **KABUSHIKI KAISHA TOSHIBA**
**72, Horikawa-cho Saiwai-ku**
**Kawasaki-shi Kanagawa-ken 210(JP)**

Applicant: **TOSHIBA INTELLIGENT**
**TECHNOLOGY LTD.**
**70, Yanagi-cho Saiwai-ku**
**Kawasaki-shi Kanagawa-ken(JP)**

(72) Inventor: **Yabuta, Toshimi c/o Patent Division**
**Kabushiki Kaisha Toshiba 1-1 Shibaura**
**1-chome**
**Minato-ku Tokyo 105(JP)**

(74) Representative: **Henkel, Feiler, Hänzel &**
**Partner**
**Möhlstrasse 37**
**D-8000 München 80(DE)**

(54) **Information recording medium.**

(57) An information recording medium such as an optical disc includes first and second substrates (11a, 11b) arranged to oppose each other with a predetermined interval therebetween. A separating member (13) is interposed between the first and second substrates (11a, 11b) such that first and second spaces (14a, 14b) are formed between the separating member (13) and the first and second substrates (11a, 11b), respectively. The separating member (13) comprises a metal which deforms little even by a temperature or humidity change. A recording layer (12a, 12b) is formed on at least one of opposing surfaces of the first and second substrates (11a, 11b).

F I G. 2

## Information recording medium

The present invention relates to an information recording medium such as an optical disc or a video disc.

An example of an optical disc is an air-sandwich type optical disc as disclosed in U.S. Pat. No. 4,074,282 issued to Balas et al. In this optical disc, first transparent substrate having first recording layer on its surface and second transparent substrate having second recording layer on its surface are arranged such that layers oppose each other through separating member for reinforcing the optical disc. Sealing member is formed at peripheral portions of substrates and seal spaces formed between separating member and substrates. Since spaces are sealed, damages to layers or adhesion of dust on their surfaces can be prevented.

In the optical disc having the above arrangement, a laser beam or the like is radiated on layer through substrate to record or read information.

In a conventional optical disc, the separating member is formed of a synthetic resin. However, a synthetic resin easily deforms due to a temperature or humidity change. As a result, the optical disc itself undesirably deforms.

It is an object of the present invention to provide an information recording medium which does not deform even by a temperature or humidity change.

According to the present invention, there is provided an information recording medium comprising: a first substrate; a second substrate arranged to oppose the first substrate with a predetermined interval there-between; a metal separating member arranged between the first and second substrates such that first and second spaces are formed between the metal separating member and the first and second substrates, respectively; and a recording layer formed on at least one of opposing surfaces of the first and second substrates.

In the information recording medium of the present invention, aluminum, copper, or the like can be used as a metal for constituting the metal separating member. Of these metals, aluminum is most preferable.

In the information recording medium of the present invention, the separating member is formed of a metal as described above. In this case, light from an optical sensor for detecting a rotational speed of the information recording medium is reflected by the separating member to prevent detection of the rotational speed. Therefore, a sealing member comprising a synthetic resin and having a projection for preventing light reflection is formed between the separating member and the substrates so that the rotational speed is detected.

This invention can be more fully understood from the following detailed description when taken in conjunction with the accompanying drawings, in which:

Fig. 1 is a plan view of an optical disc according to an embodiment of the present invention;

Fig. 2 is a sectional view of the optical disc shown in Fig. 1;

Fig. 3 is a graph showing a change over time of warping of aluminum and an acrylic resin;

Figs. 4 and 5 are sectional views for explaining various methods of mounting an inner sealing member to a separating member;

Fig. 6 is a sectional view of an optical disc according to another embodiment of the present invention;

Fig. 7 is a plan view of an optical disc according to still another embodiment of the present invention;

Fig. 8 is a sectional view of the optical disc shown in Fig. 7; and

Figs. 9 and 10 are sectional and plan views, respectively, of an inner sealing member shown in Figs. 7 and 8.

Various embodiments of the present invention will be described below with reference to the accompanying drawings.

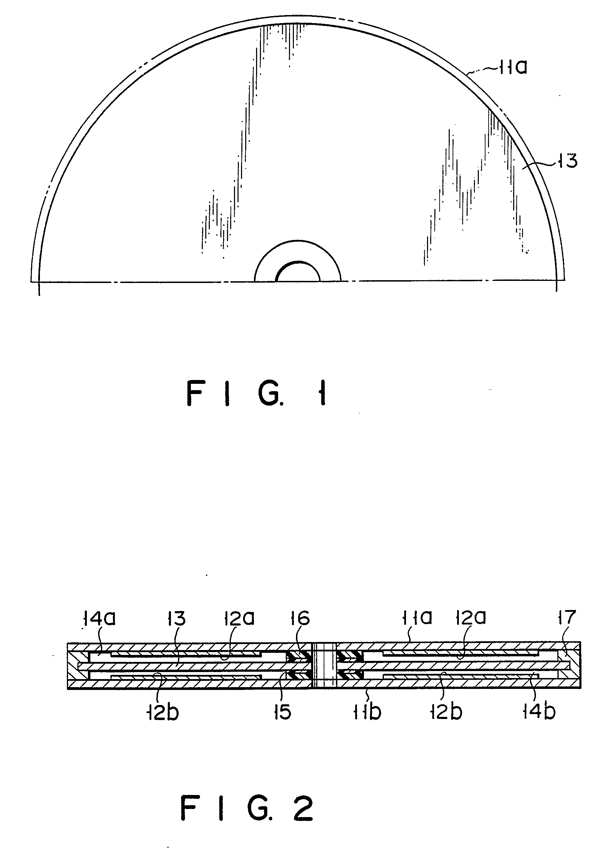

Fig. 1 is a plan view of an optical disc according to an embodiment of the present invention, and Fig. 2 is a sectional view of the optical disc. In Figs. 1 and 2, first transparent substrate 11a having first recording layer 12a on its surface and second transparent substrate 11b having second recording layer 12b on its surface are arranged such that layers 12a and 12b oppose each other through separating member 13. Substrates 11a and 11b are generally formed of glass, polycarbonate, or the like. First and second spaces 14a and 14b are formed between separating member 13 and substrates 11a and 11b, respectively.

Separating member 13 comprises a metal such as aluminum and is a disc-like member having an outer diameter of about 300 mm (or 200 mm), an inner diameter of about 35 mm, and a thickness of 1 to 3 mm. Inner sealing members 16 are mounted on central portions of both surfaces of separating member 13 through adhesive layers 15.

Outer sealing member 17 is formed between peripheral portions of substrates 11a and 11b, thereby sealing spaces 14a and 14b. Since spaces 14a and 14b are sealed, damages to layers 12a and 12b or adhesion of dust on their surfaces can be prevented.

In the optical disc having the above arrangement, a laser beam or the like is radiated on layer 12a or 12b through substrate 11a or 11b to record or read information.

In the optical disc having the above arrangement, separating member 13 comprises aluminum having low linear expansion coefficient and low degree of thermal deformation. Therefore, deformation due to a temperature or humidity change of separating member 13 is small. For this reason, deformation of the information recording medium itself can be prevented.

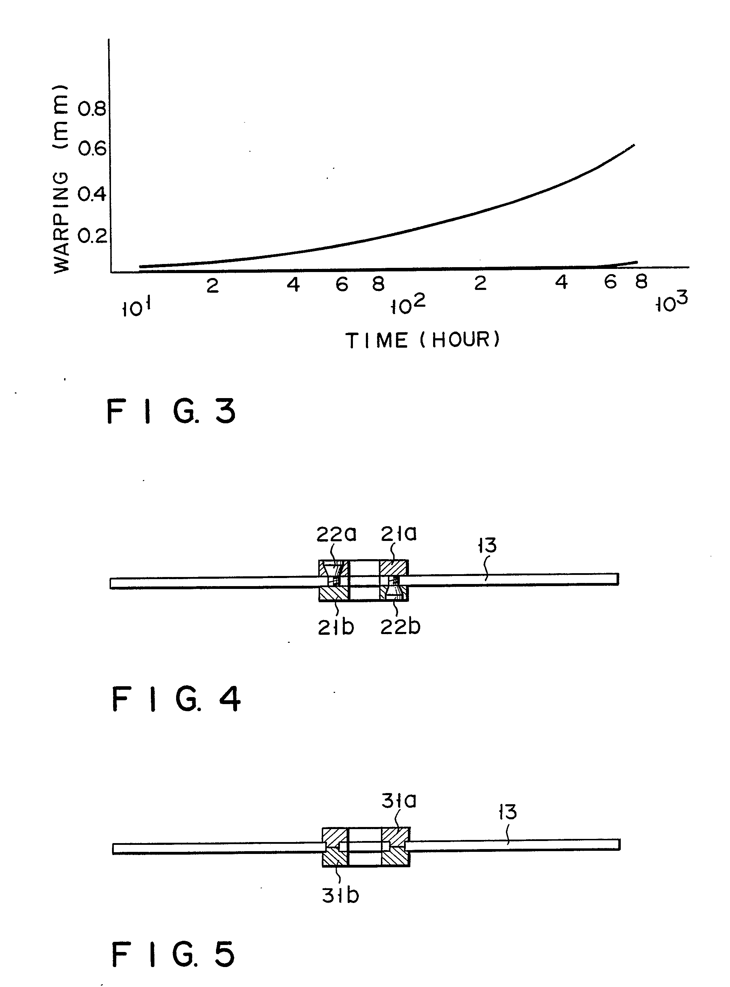

Fig. 3 shows a change over time in an amount of warping of aluminum and an acrylic resin at a temperature of 60°C and a humidity of 85%. In Fig. 3, curve A represents results obtained with aluminum and curve B represents those obtained with the acrylic resin.

In the optical disc shown in Figs. 1 and 2, each outer sealing member 16 is mounted on separating member 13 through adhesive layer 15. However, as shown in Fig. 4, inner sealing members 21a and 21b can be mounted on separating member 13 by screws 22a and 22b. Alternately, as shown in Fig. 5, inner sealing members 31a and 31b can be bonded with each other by an ultrasonic wave.

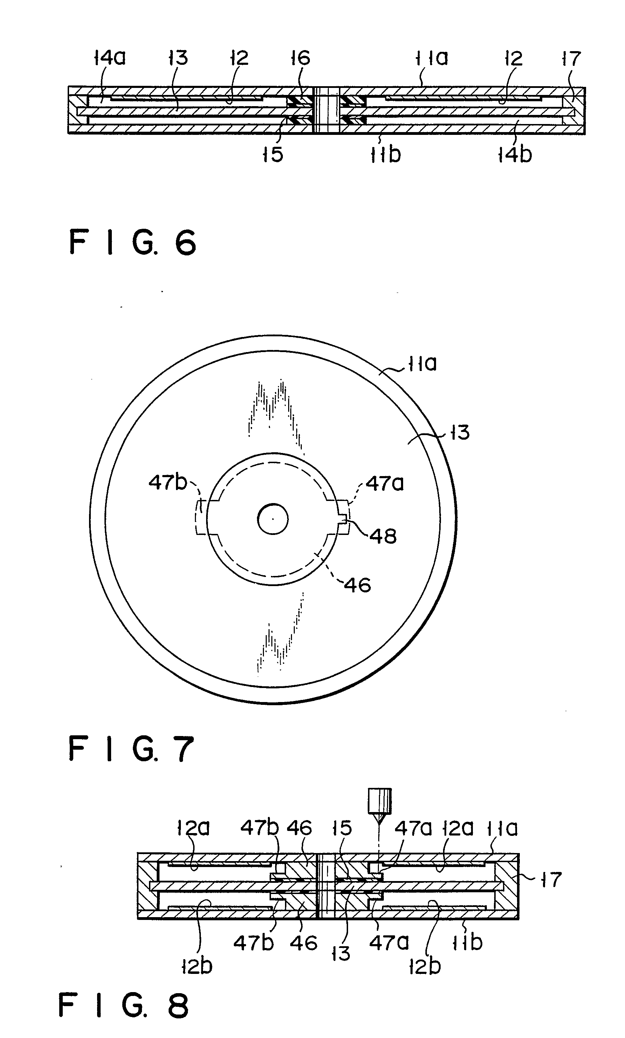

In the optical disc shown in Figs. 1 and 2, recording members 12a and 12b are formed on opposing surfaces of substrates 11a and 11b. However, as shown in Figs. 6, recording member 12 may be formed on at least one of the opposing surfaces of substrates 11a and 11b, e.g., first substrate 11a.

As described above, in the information recording medium having the above arrangement, the separating member comprises a metal. In this case, light from an optical sensor for detecting a rotational speed of the information recording medium is reflected by the separating member to prevent detection of the rotational speed. Therefore, in order to prevent light reflection, a structure as shown in Figs. 7 and 8 can be adopted.

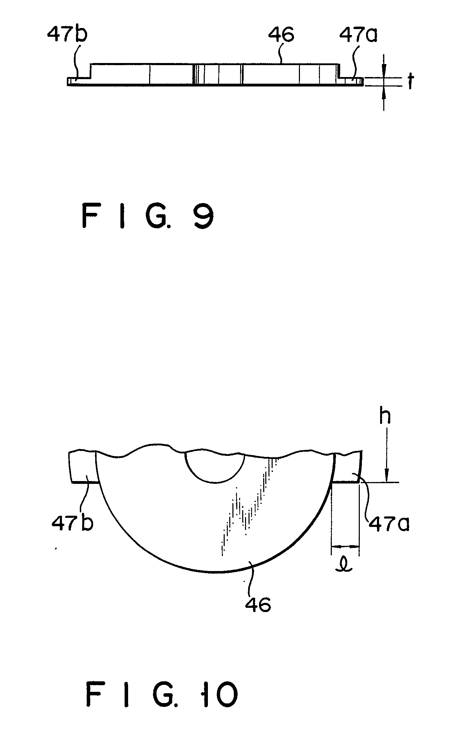

In the information recording medium shown in Figs. 7 and 8, each inner sealing member 46 is integrally formed to have a pair of symmetrical first and second projections 47a and 47b at its peripheral portion. As shown in Figs. 9 and 10, each of projections 47a and 47b has width h of 10 to 30 mm, length of 5 to 20 mm, and thickness t of 0.5 to 1 mm.

Cutout 48 is formed in recording layer 12a at a position opposite to first projection 47a so that light passes through cutout 48.

As shown in Fig. 8, photo sensor 49 is arranged above projection 47a of inner sealing member 46. Light from sensor 49 is radiated on projection 47a through cutout 48 of layer 12a upon each rotation of the information recording medium. In this case, since inner sealing member 46 comprises an acrylic resin, light reflection is prevented.

Second projection 47b of inner sealing member 46 is formed to maintain balance of rotation of the information recording medium.

The information recording medium shown in Figs. 7 and 8 is driven by a drive mechanism (not shown), and a laser beam or the like is radiated on recording layers 12a and 12b to record or read information. In this case, as described above, light from sensor 49 is radiated on first projection 47a through cutout 48 of layer 12a upon each rotation of the information recording medium, thereby counting the number of rotations of the information recording medium. A wow and flutter is detected by this counting, and the rotational speed of the information recording medium is controlled to be a desired one by the drive mechanism.

As has been described above, the information recording medium according to the present invention does not deform even by a temperature or humidity change because the separating member comprises a metal.

## Claims

1. An information recording medium comprising:
a first substrate (11a);
a second substrate (11b) arranged to oppose said first substrate (11a) with a predetermined interval therebetween;
a metal separating member (13) arranged between said first and second substrates (11a, 11b) such that first and second spaces (14a, 14b) are formed between said metal separating member (13) and said first and
second substrates (11a, 11b), respectively; and a recording layer (12a, 12b) formed on at least one of opposing surfaces of said first and second substrates (11a, 11b).

2. A medium according to claim 1, characterized in that said metal separating member (13) comprises a metal selected from the group consisting of aluminum and copper.

3. A medium according to claim 1, characterized in that said metal separating member (13) comprises aluminum.

4. A medium according to claim 1, characterized in that said metal separating member has sealing members (16) on central portions of both surfaces.

5. A medium according to claim 4, characterized in that said sealing members (16) are mounted on central portions of both surfaces of said metal separating member (13) by an adhesive (15).

6. A medium according to claim 4, characterized in that said sealing members (21a, 21b) are mounted on central portions of both surfaces of said metal separating member (13) by screws.

7. A medium according to claim 4, characterized in that sealing members (31a, 31b) on central portions of both surfaces of said metal separating member (13) are bonded with each other by an ultrasonic wave.

8. A medium according to claim 4, characterized in that said sealing member (46) has a projection (47a) at a peripheral portion thereof, and said recording member (12a) has a cutout (48) at a position corresponding to said projection (47a), light being radiated on said projection (47a) through said cutout (48) to detect rotation of said information recording medium.

# F I G. 1

# F I G. 2

F I G. 3

F I G. 4

F I G. 5

F I G. 6

F I G. 7

F I G. 8

F I G. 9

F I G. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 235 812 (SUMITOMO CHEMICAL CO., LTD)<br>* Page 6, line 13 - page 7, line 1; claim 1; figure 2 * | 1,4,5 | G 11 B 7/24 |
| A | | 2,3 | |
| X | PATENT ABSTRACTS OF JAPAN, vol. 9, no. 2 (P-325)[1725], 8th January 1985; & JP-A-59 151 344 (TOSHIBA K.K.) 29-08-1984<br>* Abstract * | 1,4,5 | |
| A | IDEM | 2,3 | |
| X | PATENT ABSTRACTS OF JAPAN, vol. 9, no. 2 (P-325)[1725], 8th January 1985; & JP-A-59 151 345 (TOSHIBA K.K.) 29-08-1984<br>* Abstract * | 1,4,5 | |
| A | IDEM | 2,3 | TECHNICAL FIELDS SEARCHED (Int. Cl.4) |
| Y | DE-A-3 530 200 (PIONEER ELECTRONIC CORP.)<br>* Whole document * | 1-5 | G 11 B 7 |
| Y | EP-A-0 089 874 (THOMSON-CSF)<br>* Abstract; claims 1,5,6; figure 1 * | 1-5 | |
| A | PATENT ABSTRACTS OF JAPAN, vol. 11, no. 35 (P-542)[2482], 3rd February 1987; & JP-A-61 204 842 (HITACHI MAXELL LTD) 10-09-1986<br>* Abstract * | 6 | |

-/-

The present search report has been drawn up for all claims

| Place of search | Date of completion of the search | Examiner |
|---|---|---|
| THE HAGUE | 17-01-1989 | BENFIELD A.D. |

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 11, no. 208 (P-593)[2655], 7th July 1987; & JP-A-62 31 046 (DAICEL CHEM. IND. LTD) 10-02-1987 * Abstract * | 7 | |
| A | PATENT ABSTRACTS OF JAPAN, vol. 4, no. 180 (P-40)[662], 12th December 1980, page 53 P 40; & JP-A-55 122 281 (CANON K.K.) 19-09-1980 * Abstract * | 8 | |
| A | PATENT ABSTRACTS OF JAPAN, vol. 10, no. 127 (P-455)[2184], 13th May 1986; & JP-A-60 251 535 (DAICEL KAGAKU KOGYO K.K.) 12-12-1985 * Abstract * | 1 | |

TECHNICAL FIELDS
SEARCHED (Int. Cl.4)

The present search report has been drawn up for all claims

| Place of search | Date of completion of the search | Examiner |
|---|---|---|
| THE HAGUE | 17-01-1989 | BENFIELD A.D. |

EPO FORM 1503 03.82 (P0401)